**Europäisches Patentamt**

**European Patent Office**

**Office européen des brevets**

(11) Numéro de publication: **0 093 064**

**B1**

(12) **FASCICULE DE BREVET EUROPÉEN**

(45) Date de publication du fascicule du brevet:
25.02.87

(21) Numéro de dépôt: **83430005.5**

(22) Date de dépôt: **14.02.83**

(51) Int. Cl.⁴: **B 29 C 57/00**

(54) **Procédé pour le formage des raccords sur flexibles.**

(30) Priorité: **23.04.82 FR 8207194**

(43) Date de publication de la demande:
**02.11.83 Bulletin 83/44**

(45) Mention de la délivrance du brevet:
**25.02.87 Bulletin 87/9**

(84) Etats contractants désignés:
**AT BE CH DE GB IT LI NL SE**

(56) Documents cité:
**AU-B-141 671**
**FR-A-2 392 314**
**GB-A-639 997**
**US-A-3 318 339**
**US-A-3 435 109**

(73) Titulaire: **Société des commandes à distance
oleopneumatiques S.A. SOCADO, BP 148 ZI
Saint Mitre Aubagne, F-13675 Aubagne Cedex (FR)**

(72) Inventeur: **Grellou, Alain, ZI St Mitre Aubagne
BPN 148, F-13675 Aubagne (FR)**

(74) Mandataire: **Roman, Alphonse, 35 Rue Paradis,
F-13001 Marseille (FR)**

EP 0 093 064 B1

## Description

La présente invention se rapporte à un procédé pour le formage des raccords sur flexibles et tuyauteries souples.

Il est destiné à la confection de raccordements pour tous appareillages domestiques et industriels en assurant le passage intégral des fluides liquides ou gazeux avec étanchéité améliorée et en permettant d'obtenir une fabrication rapide ainsi qu'économique.

Pour le raccordement des appareillages ménagers afin d'obtenir l'admission des fluides sous pressions tels les machines à laver, fourneaux à gaz, comme pour tous les appareillages industriels équivalents, on utilisait généralement des viroles, des nipples et des joints. Afin d'éviter l'emploi de ces éléments, on a essayé de former l'extrémité des conduits pour recevoir directement les pièces de raccordement, mais ces formages avec coudages à angle droit amorçaient des points de rupture dans la texture même du conduit et très souvent on n'obtenait pas une étanchéité suffisante, car ces conduits sont constitués par une garniture interne, une armature ou un tressage de renforcement comportant un revêtement extérieur. Cette structuration hétérogène nuisait au formage du talon externe de retenue et à l'étanchéité de jointage.

Les procédés cités par les brevets US-A 3 435 109, GB-A 141 671, FR-A 2 292 314 revendiquent des moyens de formage que n'utilisent pas le revêtement interne élastique comme joint d'étanchéité recouvrant l'enveloppe externe résistante.

Le procédé suivant l'invention supprime ces inconvénients et permet d'éviter non seulement l'utilisation des viroles, des nipples, mais encore des opérations de sertissage ainsi que l'emploi des joints d'étanchéité ou rondelles, en donnant la possibilité de relier le conduit directement à l'embout adducteur par une simple bague écrou de raccordement.

Il est constitué par le moulage des extrémités du conduit pour obtenir par compression et à chaud ou par tout autre moyen le talon de raccordement mais avec une pige dont la face de formage inférieure comporte une courbure déflectrice assurant le fluage de la garniture interne pour recouvrir l'intégralité de la surface de contact sans toutefois provoquer une cassure ou affaiblissement structurel.

Sur les dessins annexés, donnés à titre d'exemple non limitatif, d'une des formes de réalisation de l'objet de l'invention:

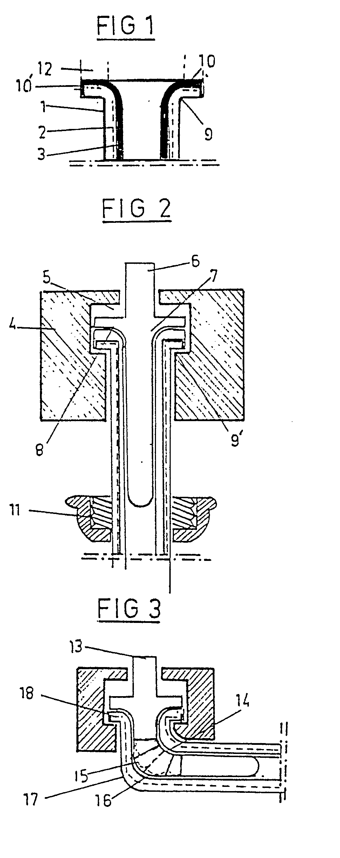

La figure 1 représente le formage de raccordement de l'extrémité du conduit. Les figures 2 et 3 montrent vues en élévation et en coupe les modes de réalisation du formage.

Les extrémités des conduits de raccordement sont profilées de façon à réaliser le formage du raccord en utilisant la substance même dont est constitué le tuyau à savoir d'un revêtement externe 1, d'un tressage de renforcement 2 et d'une garniture interne 3 préférentiellement de nature différente.

Cette extrémité est placée dans un moule chauffant 4 fermé par des mâchoires dont l'orifice correspond au diamètre extérieur du conduit.

Ce moule comporte à sa partie supérieure une chambre de formage 5 dans laquelle coulisse une pige 6 dont la tige constitue un calibrage empêchant toute déformation de la canalisation.

Elle est pourvue à sa partie supérieure d'un épaulement horizontal 7 dont le raccordement inférieur avec la tige verticale est curviligne 8 ce qui caractérise l'invention.

Lors de la surpression de formage le revêtement externe 1 du conduit est coudé à angle droit 9 par son appui sur le profil 9' du moule.

Par contre, la garniture interne entre en contact avec le profil 8 déflecteur qui provoque un fluage uniforme de la substance sur toute la surface de contact 10. la substance ramolie recouvre alors, non seulement la partie qui sera en contact avec l'embout 12 subissant la traction de l'écrou de serrage 11, mais débordant légèrement sur la face verticale 10' de l'épaulement périphérique.

On obtiendra alors une étanchéité totale, horizontale et verticale.

Le tressage également déflecté structure l'ensemble du talon "autogène" récepteur des éléments de raccordementlimités uniquement à l'écrou 11 et à l'embout de la contre-partie 12 contactant la surface 9 avec la pression transmise par le vissage de l'écrou de serrage 11.

Ce fluage par la courbure 8 de l'empreinte supprime l'usage de tout joint interposé entre les éléments de raccordement sous pression.

Pour les extrémités coudées figure 3, on utilise une pige 13 préférentiellement articulée avec coudage 14 et rotules 15, 16 ou autre moyen facilitant l'extraction de la contre dépouille et assurant le formage stabilisé non seulement de la courbure 17 mais encore de l'épaulement 18.

Il est aussi possible partant d'un secteur de flexible de réaliser des raccords rectilignes ou courbés sans apport de matériaux hétérogènes en utilisant le formage de l'extrémité du tuyau comme retenue d'assemblage et garniture d'étanchéité rendue indéformable par l'écrou de serrage et l'embout de vissage, ou par vibrations ultra-sons, ou tout autre système.

Toutefois les formes, dimensions et dispositions des différents éléments pourront varier dans la limite des équivalents comme d'ailleurs les matières utilisées pour leur fabrication, sans changer pour cela la conception générale de l'invention qui vient d'être décrite.

## Revendication

Procédé pour le formage des raccords sur flexibles et tuyauteries souples se caractérisant par:

a) la mise en place d'un tuyau constitué d'un revêtement externe (1), d'un tressage de renforcement (2) et d'une garniture interne (3) souple dans un moule chauffant (4) comportant une chambre de formage (5) dans laquelle coulisse une pige verticale (6) comprenant un épaulement dont le raccordement inférieur avec la tige verticale est curviligne,

b) l'abaissement de la pige (6) du moule, provoquant l'évasement à 90° du revêtement externe (1) du tuyau et, du fait de la chaleur, le fluage de la garniture interne (3) du tuyau qui, par ce fluage, va recouvrir la face supérieure (10) et la face latérale périphérique (10') de la bride ainsi obtenue, de façon que la garniture rigide (1) orne la garniture souple (3) après formage et constitue un support à la surface étanche souple de contact.

## Patentansprüche

Verfahren zur Formung von Anschlüssen bei Schläuchen und biegsamen Rohren, gekennzeichnet durch:

a) die Anbringung eines Rohres, bestehend aus einem äußeren Mantel (1), einem Verstärkungsgeflecht (2) und einem biegsamen inneren Belag (3) in einer erwärmenden Preßform (4), bestehend aus einer Formkammer (5), in die ein senkrechter Stab (6) eingeführt wird, der einen Wulst besitzt, dessen innerer Anschluß mit dem senkrechten Stab kurvenförmig ist, b) das Niederdrücken des Stabs (6) in der Form, wodurch eine Erweiterung des äußeren Mantels (1) um 90° und aufgrund der Erwärmung ein Fließen des Innenbelags (3) des Rohrs erfolgt, welcher durch dieses Fließen die Oberseite (10) und die seitliche Außenfläche (10') des so erhaltenen Flansches bedeckt, sodaß der feste Belag (1) den biegsamen Belag (3) nach der Formung auskleidet und eine Auflage für die dichte und biegsame Kontaktfläche bildet.

## Claim

Process for forming connections on flexible joints and pipes characterized by:

a) the fixing of a pipe consisting of an external coating (1), a reinforcement braiding (2) and an internal flexible lining in a heating mould (4) comprising a forming chamber (5) in which slides a vertical rod (6) comprising a shoulder whose internal connection with the vertical rod is curved,

b) the lowering of the mould provoking flaring at 90° of the external coating (1) of the pipe and, owing to the heat, the creep of the internal lining of the pipe (3) which, by means of this creep, will cover the upper peripheral lateral side (10) of the flange thus obtained so that the rigid lining adorns the flexible lining (3) after forming and constitutes a support on the flexible impervious contact surface.

## FIG 1

## FIG 2

## FIG 3